# EUROPÄISCHE PATENTSCHRIFT

(11) **EP 1 879 763 B1**
(45) Veröffentlichungstag und Bekanntmachung des Hinweises auf die Patenterteilung: **03.07.2013**
(21) Anmeldenummer: 06753471.9
(22) Anmeldetag: 03.05.2006
(51) Int. Cl.: B60K 1/00, B60K 17/08, B60K 17/16, F16H 57/04, B60T 1/00

(54) **ANTRIEBSEINHEIT FÜR EIN KRAFTFAHRZEUG**
DRIVE UNIT FOR A MOTOR VEHICLE
UNITE D'ENTRAINEMENT DESTINEE A UN VEHICULE

(30) Priorität: 13.05.2005 DE 102005022926
(43) Veröffentlichungstag der Anmeldung: 23.01.2008
(60) Teilanmeldung: 10181133.9
(73) Patentinhaber: GETRAG Getriebe- und Zahnradfabrik Hermann Hagenmeyer GmbH & Cie KG, 74199 Untergruppenbach (DE)
(72) Erfinder: KNOBLAUCH, Daniel, 74199 Untergruppenbach (DE); KNOEDEL, Ulrich, 74379 Ingersheim (DE); STAMMBERGER, Marc, 75438 Knittlingen (DE)
(74) Vertreter: Steil, Christian
(86) Internationale Anmeldenummer: PCT/EP2006/004111
(87) Internationale Veröffentlichungsnummer: WO 2006/122649

(56) Entgegenhaltungen:
- EP-A- 1 229 270
- DE-A1- 4 305 055
- FR-A- 2 693 527
- NL-C2- 1 018 127

## Beschreibung

Die vorliegende Erfindung betrifft eine Antriebseinheit für ein Kraftfahrzeug, mit einem elektrischen Antriebsmotor und einem Wechselgetriebe mit wenigstens zwei Gangstufen.

Eine derartige, dem Oberbegriff das Anspruchs 1 entsprechende, Antriebseinheit ist bekannt aus der DE 43 05 055 A1.

Elektrofahrzeuge mit einer elektrischen Antriebseinheit sind seit langem bekannt. Bislang bestand das Ziel bei derartigen Elektrofahrzeugen darin, Emissionen zu vermeiden, wie sie bei einem Verbrennungsmotor auftreten. Derartige Fahrzeuge sind daher vorwiegend unter dem Gesichtspunkt entwickelt worden, im Stadtbetrieb angemessene Fahrleistungen zu erzielen. Die Reichweite ist für längere Fahrten generell unzureichend. Dies liegt auch an dem notwendigen schweren Energiespeicher in Form eines Akkumulators, einer Brennstoffzelle oder Ähnlichem.

Seit einigen Jahren sind auch Hybrid-Antriebe im Einsatz. Hier besteht das Ziel darin, bei bestimmten Fahrsituationen keine Emissionen zu erzeugen, längere Fahrten mit dem Verbrennungsmotor jedoch zu ermöglichen.

Ferner kann bei derartigen Hybrid-Konzepten ein Vorteil daraus gezogen werden, dass die Antriebsmotoren parallel geschaltet (Boost-Betrieb), und dass gegebenenfalls eine Rekuperation erfolgen kann (beispielsweise im Schubbetrieb).

Aus der DE 42 12 324 A1 ist eine Antriebseinheit zum Antrieb eines Stadtautos mittels Elektromotor bekannt. Die Antriebseinheit beinhaltet ein Schaltgetriebe, das zwei Geschwindigkeiten in Vorwärtsrichtung und einen Rückwärtsgang aufweist.

Das Schaltgetriebe weist eine erste Welle auf, die sich aus einem Gehäuse des Getriebes heraus erstreckt und außerhalb des Gehäuses mit dem Elektromotor verbindbar ist. An der ersten Welle sind zwei Ritzel für die zwei Gangstufen festgelegt.

An einer zweiten Welle sind zwei den Ritzeln entsprechende Losräder gelagert, die mittels zweier Kupplungen schaltbar sind. Diese werden so geschaltet, dass jeweils eine der Kupplungen geöffnet und die andere geschlossen ist. Die Neutralstellung wird durch Abschalten des Elektromotors bestimmt.

Ein vom Konzept her ähnlicher Antriebsstrang ist aus der DE 199 17 724 A1 bekannt. Bei diesem Antriebsstrang sind an einer Getriebewelle zwei Losräder gelagert, die jeweils außenseitig mit einer zugeordneten Kupplungseinrichtung verbunden sind.

Die Losräder stehen jeweils mit einem Festrad in Eingriff. Die Festräder sind an einem Differentialkorb eines Ausgleichsgetriebes der zugeordneten Achse des Kraftfahrzeuges festgelegt.

Aus der DE 43 05 055 A1 ist eine Achsantriebseinheit für ein Elektromobil bekannt, mit einem Elektromotor, einem Schaltgetriebe, bei dem eine Antriebswelle mit Losrädern versehen ist, die mit Festrädern kämmen und wahlweise mit ihrer Welle kuppelbar sind, und mit einem Ausgleichsgetriebe, dessen Differentialkorb koaxial zu Achsantriebswellen ausgerichtet ist. Um eine möglichst kleine, leichte und billige Antriebseinheit zu schaffen, ist der Differentialkorb selbst die Abtriebswelle des Getriebes, und die Losräder sind mittels einer Schaltmuffe mit der Antriebswelle verbindbar. Die Schaltmuffe bedient dabei eine erste Klauenkupplung zur Verbindung des ersten Losrades mit der Antriebswelle und eine zweite Klauenkupplung zur Verbindung des zweiten Losrades mit der Antriebswelle.

Die Antriebswelle ist über einen Konstanten-Radsatz mit einer Kuppelhülse verbunden, die drehbar in dem Getriebegehäuse gelagert ist. Die Kuppelhülse ist mit einer Motorwelle verbindbar, und zwar durch eine Öffnung in dem Getriebegehäusedeckel hindurch. Das an der Kuppelhülse festgelegte Antriebsritzel des Konstanten-Radsatzes ist in unmittelbarer Nachbarschaft mittels eines ersten Lagers, das an dem Hauptgehäuse festgelegt ist, und eines zweiten Lagers gelagert, das an dem Getriebegehäusedeckel gelagert ist.

Das Ausgleichsgetriebe ist gleichfalls innerhalb des Hauptgehäuseteils gelagert.

An dem Differentialkorb des Ausgleichsgetriebes ist ferner ein Sperrenrad festgelegt, das mittels einer von Hand oder automatisch betätigbaren Klinke zusammenwirken kann, um eine Parksperreneinrichtung zu realisieren.

Die bekannten Antriebseinheiten weisen entweder ein unbefriedigendes Leistungsgewicht, eine unzureichende Getriebeakustik und/oder eine unbefriedigende Fahrdynamik auf.

Demzufolge besteht die Aufgabe der Erfindung darin, eine verbesserte Antriebseinheit für ein Kraftfahrzeug anzugeben.

Diese Aufgabe wird gemäß dem Gegenstand des Anspruchs 1 dadurch gelöst, dass Gang-Radsätze für Gangstufen des Wechselgetriebes und das Ausgleichsgetriebe in axialer Richtung zwischen dem Antriebsmotor und dem Konstanten-Radsatz angeordnet sind.

Dadurch kann in axialer Richtung eine kompakte Bauweise realisiert werden. Ferner ist es möglich, die sich zwischen dem Antriebsmotor und dem Konstanten-Radsatz erstreckende Welle vergleichsweise dünn auszubilden. Hierdurch kann diese Welle mit einer gewissen Elastizität ausgebildet werden, wodurch sie als eine Art "Feder" bzw. "Dämpfer" eingerichtet werden kann.

Dies gilt natürlich insbesondere dann, wenn ein hoch dynamischer elektrischer Antriebsmotor verwendet wird.

Ferner ist es vorteilkaft, dass der Antriebsmotor und das Wechselgetriebe in einem gemeinsamen Gehäuse aufgenommen sind.

Durch diese Maßnahme kann eine kompakte und integrale Bauweise der Antriebseinheit erzielt werden.

Von besonderem Vorteil ist es, wenn das Gehäuse bzw. der Gehäuseabschnitt, an dem der Antriebsmotor und das Wechselgetriebe gelagert bzw. aufgenommen sind, einstückig ausgebildet ist.

Weiterhin ist es vorteilhaft, wenn in dem Gehäuse ferner das Ausgleichsgetriebe aufgenommen ist, das ein Eingangsglied, wie einen Differentialkorb, aufweist, das mit dem Wechselgetriebe verbunden ist.

Von besonderem Vorzug ist es, wenn das gemeinsame Gehäuse eine Trennwand aufweist, durch die hindurch eine Motorwelle des Antriebsmotors oder eine hiermit verbundene Antriebswelle hin zu dem Wechselgetriebe geführt ist.

Das gemeinsame Gehäuse bzw. der gemeinsame Gehäuseabschnitt, an dem sowohl der Antriebsmotor als auch das Wechselgetriebe gelagert sind, weist folglich eine vorzugsweise einstückig damit ausgebildete Trennwand auf, so dass eine gegebenenfalls vorgesehene Abdichtung zwischen dem Antriebsmotor und dem Wechselgetriebe einfach zu realisieren ist.

Hierbei ist es ferner vorteilhaft, wenn eine Gehäusebasis einen an einer Seite offenen, mittels eines ersten Deckels verschlossenen Motorraum zur Aufnahme des Antriebsmotors sowie einen Getrieberaum zur Aufnahme des Wechselgetriebes und gegebenenfalls des Ausgleichsgetriebes aufweist.

Es versteht sich, dass der Motorraum und der Getrieberaum vorzugsweise durch die Trennwand voneinander getrennt sind.

Der Getrieberaum ist vorzugsweise an der anderen Seite der Getriebebasis ausgebildet und zu der anderen Seite hin offen sowie mittels eines zweiten Deckels verschlossen.

Durch die Ausbildung mit einer Gehäusebasis, an der der Motorraum und der Getrieberaum vorgesehen sind, und zwei vorzugsweise in parallelen Achsen aufsetzbaren Deckeln lässt sich die erfindungsgemäße Antriebseinheit besonders einfach und kostengünstig montieren. Ferner kann insgesamt eine hohe Gehäusefestigkeit erzielt werden, was sich günstig auf das Schwingungsverhalten und die Akustik auswirkt.

Dadurch, dass die Motorwelle des Antriebsmotors oder die hiermit verbundene Antriebswelle über den Konstanten-Radsatz mit den Zwischenwelle des Wechselgetriebes verbunden, ist, ist es möglich, einen schnell laufenden elektrischen Antriebsmotor zu verwenden, so dass sich insgesamt eine kompakte Bauform ergeben kann.

Bei der eingangs genannten Antriebseinheit ist auch vorgesehen, dass die Übersetzung des Konstanten-Radsatzes im Bereich von 1:3 bis 1:7, vorzugsweise im Bereich von 1:4 bis 1:6 liegt.

Bei einer solchen Übersetzung ist es möglich, einen besonders schnell laufenden elektrischen Antriebsmotor zu verwenden.

Von Vorteil ist es, wenn der Konstanten-Radsatz ein Antriebsritzel aufweist, das an der Motorwelle oder der Antriebswelle festgelegt ist, die mit der Motorwelle verbunden ist.

Ferner ist es vorteilhaft, wenn das Antriebsritzel mittels eines ersten und eines zweiten Lagers gelagert ist, die vorzugsweise unmittelbar benachbart auf der einen bzw. anderen Seite des Antriebsritzels angeordnet sind.

Hierdurch ist es möglich, das Antriebsritzel stabil zu lagern. Von Bedeutung ist dabei auch, dass das Antriebsritzel in axialer Richtung stabil gelagert wird, um aufgrund der üblicherweise verwendeten Schrägverzahnung des Konstanten-Radsatzes keine Axialkräfte in die Motorwelle des elektrischen Antriebsmotors zu leiten. Ebenso gelangen keine elektrisch erzeugten Axialkräfte vom Motor in das Getriebe.

Vorteilhaft ist es ferner, wenn der Konstanten-Radsatz benachbart zu dem zweiten Deckel angeordnet ist, der den Getrieberaum verschließt.

Durch diese Maßnahme können beispielsweise Lager zum Lagern der Zahnräder des Konstanten-Radsatzes auf einer Seite an dem zweiten Deckel gelagert werden. Insgesamt kann so eine sehr kostengünstige Montage erzielt werden.

Insgesamt ist es auch vorteilhaft, wenn das Wechselgetriebe einen ersten und einen zweiten Gang-Radsatz aufweist, die jeweils ein mit einem Eingangsglied eines Ausgleichsgetriebes drehfest verbundenes Festrad aufweisen.

Es hat sich gezeigt, dass ein Wechselgetriebe mit zwei Gangstufen für viele Anwendungsfälle hinreichend ist, insbesondere für Elektrofahrzeuge.

Hierbei ist auch vorteilhaft, wenn das Wechselgetriebe einen ersten und einen zweiten Gang-Radsatz aufweist, die jeweils ein Losrad aufweisen, wobei die Losräder an einer Getriebewelle (vorzugsweise der Zwischenwelle) gelagert sind und jeweils mittels einer Schaltkupplung mit der Getriebewelle verbindbar sind.

Ferner ist es insgesamt vorteilhaft, wenn der erste und der zweite Gang-Radsatz in axialer Richtung zwischen dem Antriebsmotor und dem Konstanten-Radsatz angeordnet sind.

Gemäß einer bevorzugten Ausführungsform weist der erste Gang-Radsatz eine Übersetzung im Bereich von 1:2 bis 1:6, vorzugsweise im Bereich von 1:3 bis 1:5 auf.

Ferner weist der zweite Gang-Radsatz vorzugsweise eine Übersetzung im Bereich von 1:2 bis 1:4,5, vorzugsweise im Bereich von 1:2,5 bis 1:4 auf.

In Verbindung mit der bevorzugten Übersetzung des Konstanten-Radsatzes können damit große Übersetzungen von beispielsweise 1:20 realisiert werden, so dass besonders schnell laufende elektrische Antriebsmotoren verwendbar sind.

Gemäß einem weiteren Aspekt ist bei der eingangs genannten Antriebseinheit vorgesehen, dass eine Parksperreneinrichtung an einer Motorwelle des Antriebsmotors oder an einer hiermit drehfest verbundenen Antriebswelle angreift.

Diese Maßnahme hat den Vorteil, dass eine günstige Dimensionierung möglich ist, insbesondere, da die im Bereich der Motorwelle auftretenden Drehmomente durch die vergleichsweise hohe Übersetzung relativ gering sind, verglichen mit den Momenten, die an der Ausgangsseite der Antriebseinheit anstehen.

Besonders bevorzugt ist es hierbei, wenn die Parksperreneinrichtung eine Sperrmuffe aufweist, die mit einer Innen- und mit einer Außenverzahnung versehen und axial in Bezug auf die Motorwelle bzw. die hiermit verbundene Antriebswelle verschiebbar ist, und zwar zwischen einer Freigabeposition und einer Sperrposition.

Eine Parksperreneinrichtung mit einer solchen Sperrmuffe lässt sich auch in anderen Getrieben verwenden, und zwar insbesondere auf der Antriebsseite.

Ferner ist es hierbei vorteilhaft, wenn die Außenverzahnung der Sperrmuffe in einem gehäusefesten Abschnitt der Antriebseinheit axial geführt ist.

Dies ermöglicht es, den zur Realisierung einer Parksperre notwendigen festen Bezug zum Gehäuse herzustellen. Vorteilhaft ist auch, dass die zum Sperren bewegten Teile keiner rotierenden Bewegung unterliegen.

Von Vorzug ist es auch, wenn die Motorwelle oder die hiermit verbundene Antriebswelle einen Außenverzahnungsabschnitt aufweist, auf den die Sperrmuffe verschiebbar ist, um die Sperrposition einzurichten.

Da an der Motorwelle bzw. der Antriebswelle ohnehin in der Regel eine Verzahnungsbearbeitung vorgenommen wird, ist der hierzu notwendige Aufwand vergleichsweise gering.

Insgesamt ist es vorteilhaft, wenn die Innenverzahnung der Sperrmuffe und/oder der Außenverzahnungsabschnitt der Motorwelle bzw. der hiermit verbundenen Antriebswelle an dem axial zu der jeweils anderen Verzahnung weisenden Stirnseite angespitzt ist.

Dies ermöglicht ein schnelles Einspuren, und zwar selbst dann, wenn noch eine gewisse Relativdrehzahl vorhanden ist, bzw. ein Abweisen bei zu hoher Relativdrehzahl.

Auch ist es insgesamt vorteilhaft, wenn die Parksperreneinrichtung mittels einer elektromotorischen Aktuatoreinrichtung betätigbar ist.

Zwar ist generell auch eine andere Art von Aktuatoreinrichtung zur Betätigung der Parksperreneinrichtung denkbar, wie beispielsweise eine hydraulische oder manuelle Aktuatoreinrichtung.

Eine elektromotorische Aktuatoreinrichtung ist jedoch bevorzugt, zumal die Antriebseinheit ohnehin mit elektrischen Anschlüssen für den elektrischen Antriebsmotor versehen ist.

Vorteilhaft ist es ferner, wenn die Sperrmuffe in Bezug auf die Aktuatoreinrichtung in Richtung in die Sperrposition elastisch vorgespannt ist.

Hierbei ist es möglich, dass die Parksperreneinrichtung betätigt wird, und zwar mittels der Aktuatoreinrichtung, wobei jedoch die Verzahnungen aufgrund der gegebenen Relativposition nicht ineinander eingreifen können. Hierbei wird durch die elastische Vorspannung die notwendige Energie gespeichert, die zum Einspuren notwendig ist, sobald sich eine geringe Relativverdrehung ergibt, die das Einspuren ermöglicht.

Gemäß einer weiteren bevorzugten Ausführungsform dient die Aktuatoranordnung sowohl zur Betätigung der Parksperreneinrichtung als auch zur Betätigung von Schaltkupplungen zum Ein- und Auslegen der Gangstufen des Wechselgetriebes.

Durch die Maßnahme, die gleiche Aktuatoreinrichtung, insbesondere eine Schaltwalze, sowohl zum Betätigen der Gangstufen des Wechselgetriebes als auch zur Betätigung der Parksperreneinrichtung vorzusehen, kann insgesamt eine kompakte Bauweise mit wenig Aktuatorik realisiert werden.

Vorteilhaft ist es auch, wenn die Aktuatoranordnung in axialer Richtung ganz oder zumindest teilweise zwischen dem Antriebsmotor und dem Konstanten-Radsatz angeordnet ist.

Auch dies trägt zu einer kompakten axialen Bauweise bei.

Ferner ist es vorteilhaft, wenn die Parksperreneinrichtung in axialer Richtung zwischen dem Antriebsmotor und dem Konstanten-Radsatz angeordnet ist.

Der Antriebsmotor ist bei einer bevorzugten Ausführungsform für Drehzahlen größer 15.000 U/min ausgelegt, vorzugsweise für Drehzahlen größer 20.000 U/min.

Auch ist es insgesamt vorteilhaft, wenn in dem Gehäuse ein Kühlpfad zur Kühlung des Antriebsmotors ausgebildet ist.

Insgesamt ergibt sich bei der erfindungsgemäßen Antriebseinheit wenigstens einer der folgenden Vorteile:
- integrierte Bauweise (Getriebe und Motor in einem Gehäuse);
- optional ist es möglich, die Leistungselektronik für den elektrischen Antriebsmotor zu integrieren, beispielsweise an einer Außenseite des Gehäuses;
- ferner ist optional eine gemeinsame Motor-, Getriebe - und/oder Leistungselektronikkühlung möglich;
- es lässt sich ein Hochdrehzahlkonzept realisieren, wobei die Antriebsleistung vorwiegend über die Drehzahl erzeugt wird, so dass eine kompakte elektrische Maschine verwendet werden kann; es ergibt sich so ein optimiertes Leistungsgewicht;
- ein Zwei-Bereichs-Getriebe ist für die meisten Anwendungen hinreichend und gleichzeitig kompakt und mit geringem Gewicht zu realisieren;
- durch die Ausbildung mit drei Wellen lässt sich eine zweistufige Übersetzung einrichten, so dass die gesamten Übersetzungen in Stirnradbauweise frei wählbar sind;
- es ist möglich, die Schaltkupplungen als Klauenschaltkupplungen zu realisieren, so dass geringe Schaltkräfte auftreten; ferner ergibt sich eine kurze Schaltzeit;
- die Schaltkennlinie kann variabel realisiert werden, entweder leistungsorientiert oder wirkungsgradorientiert;
- es ist eine elektrische Synchronisierung der Gangstufen möglich;
- es ist eine reibschlüssige Synchronisierung möglich;
- es lässt sich eine elektromechanische Schaltaktuatorik implementieren;
- ferner lässt sich eine automatisierte Parksperre implementieren, die auch als Hill-Holder benutzt werden kann;
- die Parksperre kann manuell lösbar ausgebildet sein;
- die Parksperre kann auf der Antriebsseite angeordnet sein, so dass eine günstige Dimensionierung möglich ist;
- das Wechselgetriebe ist in Stirnrad-Bauweise realisierbar, so dass eine kostengünstige Implementierung möglich ist; alternativ ist jedoch auch eine Planetensatz-Bauweise möglich, beispielsweise koaxial;
- die Motorwelle des elektrischen Antriebsmotors und die Antriebswelle sind vorzugsweise getrennt gelagert, so dass Antriebseinflüsse nicht auf den elektrischen Antriebsmotor zurückwirken können und umgekehrt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, durch die Ansprüche festgelegten ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung der erfindungsgemäßen Antriebseinheit;
- Fig. 2: eine schematische Längsschnittansicht durch eine Parksperreneinrichtung für die Antriebseinheit;
- Fig. 3: eine schematische Querschnittsansicht entlang der Linie III-III in Fig. 2;
- Fig. 4: eine Längsschnittansicht durch ein Zahnrad eines Radsatzes; und
- Fig. 5: eine Detailansicht V der Fig. 4.

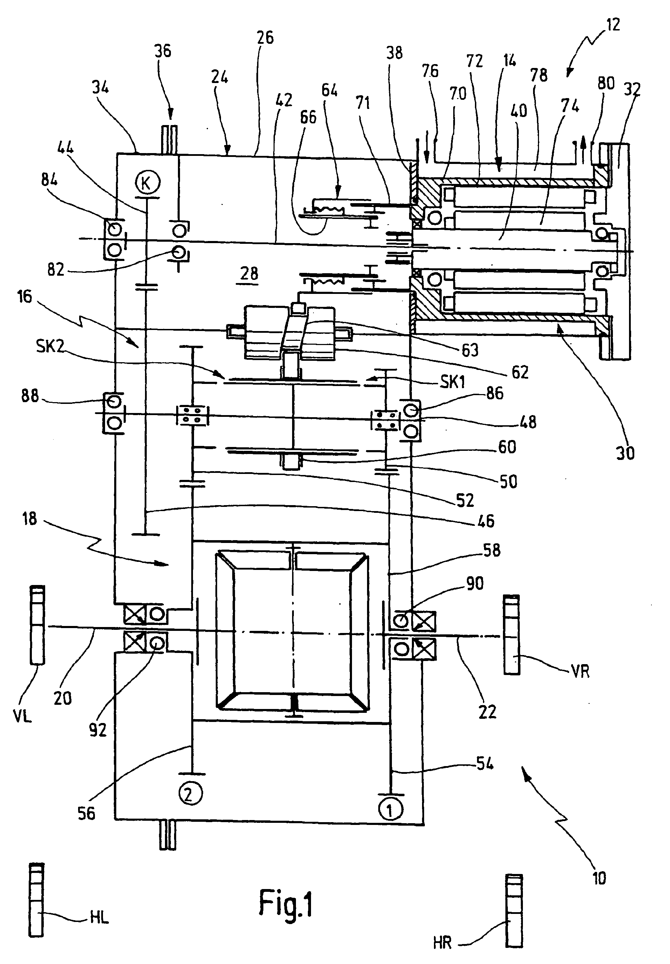

In Fig. 1 ist ein Kraftfahrzeug 10 schematisch dargestellt, das eine angetriebene Vorderachse mit einem linken Vorderrad VL und einem rechten Vorderrad VR sowie eine Hinterachse mit einem linken Hinterrad HL und einem rechten Hinterrad HR aufweist.

In Fig. 1 ist die erfindungsgemäße Antriebseinheit zum Antrieb der Vorderachse generell mit 12 bezeichnet.

Alternativ kann die Antriebseinheit 12 auch zum Antrieb einer Hinterachse ausgelegt sein.

Die Antriebseinheit 12 weist einen elektrischen Antriebsmotor 14, ein Wechselgetriebe 16 und ein Ausgleichsgetriebe 18 auf.

Antriebsleistung wird von dem elektrischen Motor 14 erzeugt und über das Wechselgetriebe 16 auf das Ausgleichsgetriebe 18 geführt. Das Ausgleichsgetriebe 18 verteilt die Antriebsleistung auf eine linke Antriebswelle 20 und eine rechte Antriebswelle 22 der Vorderachse.

Die Antriebseinheit 12 weist ferner ein Gehäuse 24 auf. Das Gehäuse 24 beinhaltet eine aus einem Stück hergestellte Gehäusebasis 26. Die Gehäusebasis 26 beinhaltet einen Motorraum 30 zur Aufnahme des elektrischen Antriebsmotors 14. Der Motorraum 30 ist, in axialer Richtung gesehen, zu einer Seite hin offen, so dass der Antriebsmotor axial in den Motorraum 30 eingesetzt werden kann. Der Motorraum 30 ist mittels eines ersten Deckels 32 verschlossen, so dass der Antriebsmotor 14 gekapselt in dem Motorraum 30 aufgenommen werden kann. Der Einsatz verschiedener Motorvarianten durch einen ein- oder mehrteiligen Adapter (Statorgehäuse 70) ist möglich.

Die Gehäusebasis 26 definiert ferner einen zu dem Motorraum 30 benachbarten Getrieberaum 28, in dem das Wechselgetriebe 16 und das Ausgleichsgetriebe 18 aufgenommen sind. Der Getrieberaum 28 ist zu der anderen axialen Seite hin offen und ist mittels eines zweiten Deckels 34 verschlossen.

Demzufolge können auch das Wechselgetriebe 16 und das Ausgleichsgetriebe 18 durch seitliches Einschieben in den Getrieberaum 28 montiert werden, wobei der zweite Deckel 34 anschließend zur Verkapselung aufgesetzt wird.

Zur Verbindung zwischen der Gehäusebasis 26 und dem zweiten Deckel 34 ist eine Flanschverbindung 36 vorgesehen. Eine entsprechende Flanschverbindung zwischen der Gehäusebasis 26 und dem ersten Deckel 32 ist in Fig. 1 nicht näher bezeichnet.

Zwischen dem Motorraum 30 und dem Getrieberaum 28 ist eine Trennwand 38 eingerichtet. Die Trennwand 38 ist einstückig an der Gehäusebasis 26 ausgebildet, oder doch zumindest nach der Art eines Lagerschildes vormontiert darin festgelegt.

Die Trennwand 38 wird von einer Motorwelle 40 des elektrischen Antriebsmotors 14 durchsetzt. Etwa im Bereich der Trennwand 38 ist die Motorwelle 40 mit einer koaxial ausgerichteten Antriebswelle 42 verbunden, beispielsweise mittels einer Verzahnung.

Die Motorwelle 40 ist gegenüber der Trennwand 38 bzw. einem weiter unten erläuterten Statorgehäuse mittels einer Wellendichtung abgedichtet. Anders ausgedrückt durchsetzt die Motorwelle 40 (oder die Antriebswelle 42) zwar die Trennwand 38, durch geeignete Dichtungsmittel sind der Getrieberaum 28 und der Motorraum 30 dennoch gegeneinander abgedichtet.

Die Antriebswelle 42 erstreckt sich von dem elektrischen Antriebsmotor 14 in axialer Richtung durch den Getrieberaum 28 bis hin zu dem zweiten Deckel 34.

Unmittelbar benachbart zu dem zweiten Deckel 34 ist ein Konstanten-Radsatz K vorgesehen, der ein Antriebsritzel 44 und ein Konstanten-Rad 46 aufweist. Das Antriebsritzel 44 ist drehfest mit der Antriebswelle 42 verbunden, beispielsweise einstückig hiermit ausgebildet. Das Konstanten-Rad 46 ist drehfest mit einer Zwischenwelle 48 verbunden, die parallel zu der Antriebswelle 42 in dem Getrieberaum 28 gelagert ist.

An der Zwischenwelle 48 sind ein erstes Losrad 50 für eine erste Gangstufe 1 sowie ein zweites Losrad 52 für eine zweite Gangstufe 2 drehbar gelagert. Das erste Losrad 50 steht in Eingriff mit einem ersten Festrad 54. Das zweite Losrad 52 steht in Eingriff mit einem zweiten Festrad 56. Die Festräder 54, 56 sind drehfest mit einem Differentialkorb 58, d.h. einem Eingangsglied des Ausgleichsgetriebes 18, drehfest verbunden.

Antriebsleistung von dem elektrischen Antriebsmotor 14 wird somit von der Motorwelle 40 über die Antriebswelle 42, den Konstanten-Radsatz K, die Zwischenwelle 48 sowie einen der Radsätze 50, 54 bzw. 52, 56 auf den Differentialkorb 58 geleitet. Das Ausgleichsgetriebe 18 verteilt die Antriebsleistung dann in an sich bekannter Weise auf die zwei Antriebswellen 20, 22.

Zur Betätigung der zwei Gangstufen 1, 2 ist eine Aktuatoranordnung vorgesehen, die eine Schaltwalze 62 aufweist. Die Schaltwalze 62 ist um eine Achse drehbar in dem Getrieberaum 28 gelagert, die parallel zu den Wellen 42, 48 ausgerichtet ist. Mittels der Schaltwalze 62 wird eine Schaltmuffe 60 betätigt, die eine erste Schaltkupplung SK1 in Form einer Klauenkupplung oder alternativ eine zweite Schaltkupplung SK2 in Form einer Klauenkupplung betätigt. Die erste Schaltkupplung SK1 dient zum Verbinden des ersten Losrades 50 mit der Zwischenwelle 48. In entsprechender Weise dient die zweite Schaltkupplung SK2 zum drehfesten Verbinden des zweiten Losrades 52 mit der Zwischenwelle 48. In einer Neutralposition (in Fig. 1 dargestellt) ist keine der zwei Schaltkupplungen SK1, SK2 geschlossen.

An der Schaltwalze 62 ist eine Umfangsspur 63 (beispielsweise eine Umfangsnut 63) vorgesehen, in der ein nicht näher bezeichneter Gleitstein geführt ist, der die Schaltmuffe 60 betätigt.

In Fig. 1 ist bei 64 ferner eine Parksperreneinrichtung gezeigt.

Die Parksperreneinrichtung 64 ist antriebsseitig angeordnet, d.h. im Bereich von Motorwelle 40 bzw. Antriebswelle 42.

Die Parksperreneinrichtung 64 ist als im Wesentlichen koaxiales Bauteil zu diesen Wellen 40, 42 vorgesehen und weist eine Sperrmuffe 66 auf, die zwischen einer - in Fig. 1 gezeigten - Freigabeposition und einer Sperrposition axial verschieblich gelagert ist.

Die Sperrmuffe 66 weist eine in Fig. 1 nicht näher bezeichnete Außenverzahnung auf, die in Eingriff steht mit einer Innenverzahnung eines durch die Trennwand 38 hindurch verlaufenden Hülsenfortsatzes 71 eines Statorgehäuses 70 eines Stators 72 des elektrischen Antriebsmotors 14.

Das radial außen liegende Statorgehäuse 70 des Antriebsmotors 14 erstreckt sich mit seinem Hülsenfortsatz 71 durch die Trennwand 38 hindurch und ist radial außenseitig gegenüber der Trennwand 38 abgedichtet. Radial innenseitig ist zwischen dem Hülsenfortsatz 71 und der Motorwelle 40 eine Wellendichtung vorgesehen, so dass der Getrieberaum 28 gegenüber dem Motorraum 30 abgedichtet ist.

An der Motorwelle 40 ist, im Bereich der Verbindung mit der Antriebswelle 42, ein Außenverzahnungsabschnitt vorgesehen, der in der Sperrposition der Sperrmuffe 66 mit der Innenverzahnung der Sperrmuffe 66 in Eingriff steht. In Fig. 1 ist jedoch gezeigt, dass die Innenverzahnung der Sperrmuffe 66 mit diesem Außenverzahnungsabschnitt nicht in Eingriff steht.

Die Sperrmuffe 66 ist mittels der gleichen Aktuatoranordnung betätigbar wie die Schaltkupplungen SK2, SK1. In dem vorliegenden Fall ist es sogar so, dass ein Gleitstein, der mit der Sperrmuffe 66 in Verbindung steht, in der gleichen Umfangsspur 63 geführt ist wie der Gleitstein, der die Schaltkupplungen SK1, SK2 betätigt.

Insgesamt ergibt sich so ein hochkompakter Aufbau mit wenig Aktuatorik.

In Fig. 1 ist radial innerhalb des Stators 72 ferner ein Rotor 74 des elektrischen Antriebsmotors 14 gezeigt, der drehfest mit der Motorwelle 40 verbunden ist.

Die Motorwelle 40 ist zum einen benachbart zu der Trennwand 38 mittels eines Lagers gelagert, das an dem Statorgehäuse 70 festgelegt ist.

Am anderen axialen Ende ist die Motorwelle 40 mittels des ersten Deckels 32 gelagert.

Der elektrische Antriebsmotor 14 lässt sich daher auf einfache Weise montieren, nämlich indem er axial in den Motorraum 30 eingeschoben wird und anschließend der erste Deckel 32 aufgesetzt wird, um den Antriebsmotor 14 darin zu fixieren und zu lagern.

In dem Motorraum 30 ist radial um das Statorgehäuse 70 herum ein Kühlwasserkanal 78 ausgebildet, der über einen Kühlwasseranschluss 76 gespeist wird. Bei 80 ist ferner ein Kühlwasserauslass gezeigt, über den das - erwärmte - Kühlwasser abgeführt wird.

Die mit der Motorwelle 40 verbundene, vorzugsweise gegenüber dieser leicht axial beweglich gelagerte Antriebswelle 42 ist mittels eines ersten Antriebswellenlagers 82 und eines zweiten Antriebswellenlagers 84 gelagert, die unmittelbar benachbart auf gegenüberliegenden Seiten des Antriebsritzels 44 des Konstanten-Radsatzes K angeordnet sind. Das erste Antriebswellenlager 82 ist dabei an der Gehäusebasis 26 festgelegt. Das zweite Antriebswellenlager 84 ist an dem zweiten Deckel 34 festgelegt.

Die Zwischenwelle 48 ist mittels eines ersten Getriebewellenlagers 86 und eines zweiten Getriebewellenlagers 88 gelagert. Das erste Getriebewellenlager 86 ist an der Gehäusebasis 26 festgelegt. Das zweite Getriebewellenlager 88 ist an dem zweiten Deckel 34 festgelegt.

In entsprechender Weise ist das Ausgleichsgetriebe 18 mittels eines ersten Abtriebswellenlagers 90 und eines zweiten Abtriebswellenlagers 92 gelagert, wobei das erste Abtriebswellenlager 90 an der Gehäusebasis 26 festgelegt ist, und wobei das zweite Abtriebswellenlager 92 an dem zweiten Deckel 34 festgelegt ist.

Im Bereich des Austritts der Abtriebswellen 20, 22 aus der Gehäusebasis 26 und dem Deckel 34 sind ferner nicht näher bezeichnete Wellendichtungen vorgesehen.

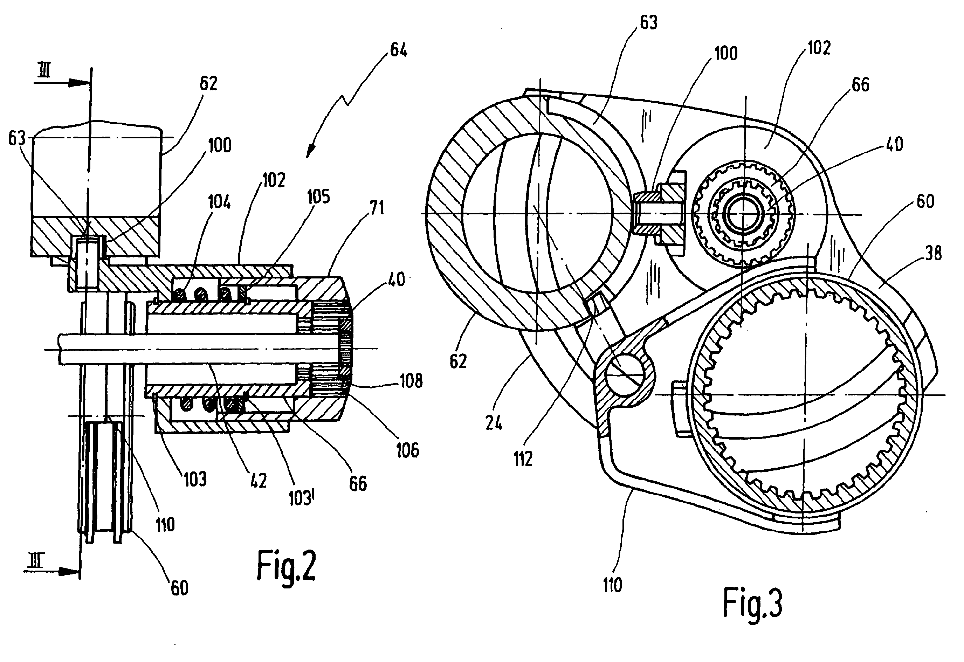

In den Fig. 2 und 3 ist in schematischer Form ein konstruktives Ausführungsbeispiel der Parksperreneinrichtung 64 dargestellt. Gleiche Elemente sind mit gleichen Bezugsziffern versehen.

Man erkennt, dass in der Umfangsspur (Umfangsnut) 63 der Schaltwalze 62 ein Gleitstein 100 geführt ist, der fest mit einer Schiebemuffe 102 verbunden ist.

Die Schiebemuffe 102 ist an ihrem zu der Motorwelle 40 weisenden Ende mit einer Ausnehmung versehen und ist auf den Hülsenfortsatz 71 des Statorgehäuses 70 aufgesteckt. Die Schiebemuffe 102 wird hierdurch in axialer Richtung an dem Hülsenfortsatz 71 geführt.

Die Sperrmuffe 66 ist innerhalb der Ausnehmung der Schiebemuffe 102 gelagert. Genauer gesagt ist die Sperrmuffe 66 an ihrem hinteren, von der Motorwelle 40 weg weisenden Ende außenumfänglich mit einem Sprengring 103 versehen. Die Sperrmuffe 66 durchsetzt verdrehfest eine axiale Durchgangsbohrung der Schiebemuffe 102, wobei der Sprengring 103 auf der der Motorwelle 40 abgewandten Außenseite der Schiebemuffe 102 anliegt. Im Inneren der Ausnehmung der Schiebemuffe 102 ist an dem Außenumfang der Sperrmuffe 66 eine Stützscheibe 105 festgelegt, die mittels eines weiteren Sprengringes 103' axial gehalten wird. Eine Druckfeder 104 ist zwischen der Stützscheibe 105 und dem Boden der Ausnehmung der Schiebemuffe 102 gelagert, und zwar außenumfänglich koaxial zu der Sperrmuffe 66. Die Druckfeder 104 drückt die Sperrmuffe 66 gegenüber der Schiebemuffe 102 in Richtung hin zu der Motorwelle 40 bzw. spannt die Sperrmuffe 66 in diese Richtung vor.

Die Sperrmuffe 66 ist an ihrem zu der Motorwelle 40 hin weisenden Ende mit einer Außenverzahnung (in Fig. 2 nicht näher bezeichnet) ausgebildet, die in einer Innenverzahnung 106 des Hülsenfortsatzes 71 geführt ist. Ferner ist die Sperrmuffe 66 als Hohlmuffe ausgebildet, die von der Antriebswelle 42 durchsetzt wird bzw. koaxial zu dieser angeordnet ist. In ihrem vorderen Bereich, also zu der Motorwelle 40 hin weisend, ist die Sperrmuffe 66 ferner mit einer axialen Innenverzahnung (nicht näher bezeichnet) ausgestattet.

In der in Fig. 2 gezeigten Position ist der Innenverzahnungsabschnitt der Sperrmuffe 66 beabstandet von einem Außenverzahnungsabschnitt 108, der an der Motorwelle 40 vorgesehen ist.

Man erkennt in Fig. 2 ferner, dass die Antriebswelle 42 an ihrem mit der Motorwelle 40 verbundenen Ende mit einer Außenverzahnung versehen ist, die in eine Innenverzahnung der Motorwelle 40 greift, und zwar zur drehfesten Verbindung hiermit.

Bei Betätigung der Parksperreneinrichtung 64 von der in Fig. 2 gezeigten Freigabeposition in die Sperrposition wird die Schaltwalze 62 verdreht. Mittels des Gleitsteines 100 wird die Schiebemuffe 102 versetzt, und zwar in Richtung hin zu der Motorwelle 40. Die Sperrmuffe 66 wird dabei mitgenommen.

Sobald der Innenverzahnungsabschnitt der Sperrmuffe 66 axial an den Außenverzahnungsabschnitt 108 der Motorwelle 40 gelangt, spuren die Verzahnungen ineinander ein. Hierdurch wird eine drehfeste Verbindung zwischen der Motorwelle 40 und dem gehäusefesten Statorgehäuse 70 eingerichtet. Ferner ist, was in Fig. 2 nicht dargestellt ist, in dieser Position die Schaltkupplung SK1 betätigt, so dass die Antriebswellen 20, 22 über die Verzahnungen der diversen Radsätze formschlüssig mit der Motorwelle 40 verbunden sind.

In Fig. 3 ist gezeigt, dass in die gleiche Umfangsnut 63 ein zweiter Gleitstein 112 eingreift, der mit einer Schaltgabel 110 verbunden ist, die dazu eingerichtet ist, die Schaltmuffe 60 zum Betätigen der Schaltkupplungen SK1, SK2 zu verschieben.

Die Innenverzahnung der Sperrmuffe 66 und/oder die Außenverzahnung 108 der Motorwelle 40 sind an ihren aufeinander zu weisenden Enden mit einer Anspitzung versehen, um ein Einspuren zu erleichtern. Ferner wird ab einer gewissen Relativdrehzahl durch die Anspitzung(en) das "Abweisen" der Sperrmuffe 66 durch die Außenverzahnung 108 erreicht.

Nichtsdestotrotz kann es aufgrund der Relativstellung zwischen der Motorwelle 40 und der Sperrmuffe 66 zum Zeitpunkt des Betätigens der Parksperreneinrichtung 64 dazu kommen, dass ein Einspuren nicht möglich ist. In diesem Fall wird bei fortgesetzter Betätigung der Schaltwalze 62 die Druckfeder 104 komprimiert. In diesem Zustand speichert die Druckfeder 104 Energie, und sobald - beispielsweise bei einem Wegrollen des Fahrzeugs - sich die Motorwelle 40 relativ zu der Sperrmuffe 66 verdreht, drückt die in der Druckfeder 104 gespeicherte Energie die Sperrmuffe 66 auf die Außenverzahnung 108 der Motorwelle 40, um so die Sperrposition einzurichten.

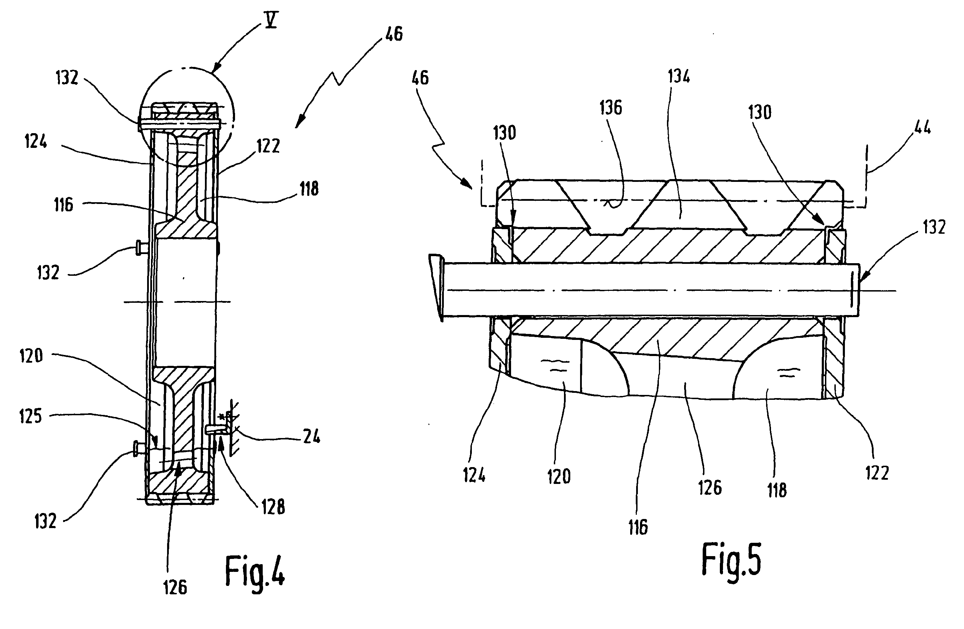

In den Fig. 4 und 5 ist ein Zahnrad, genauer gesagt das Konstanten-Rad 46 des Konstanten-Radsatzes K der Antriebseinheit 12, gezeigt. Die in Bezug auf die in den Fig. 4 und 5 gezeigten Zahnräder erläuterten Merkmale sind jedoch auf jede andere Zahnradpaarung in gleichem Maße anwendbar.

Das Konstanten-Rad 46 weist einen Radkörper 116 auf, der im Bereich zwischen seiner Nabe und der radial außen liegenden Verzahnung auf der einen Seite mit einer ersten Axialausnehmung 118 und auf der axial gegenüberliegenden Seite mit einer zweiten Axialausnehmung 120 ausgebildet ist.

Auf die axiale Seite des Radkörpers 116, bei der die ringförmige Axialausnehmung 118 ausgebildet ist, ist eine erste Spritzscheibe 122 aufgesetzt, die beispielsweise als Ringscheibe ausgebildet sein kann und einen Abschnitt der ersten Axialausnehmung 118 abdeckt. Genauer gesagt bedeckt die erste Spritzscheibe 122 lediglich einen radial außen liegenden Abschnitt der ersten Axialausnehmung 118 und begrenzt dort einen radial außen liegenden Ringraum (nicht näher bezeichnet).

In entsprechender Weise ist auf die zweite Axialausnehmung 120, die ebenfalls als Ringausnehmung ausgebildet ist, eine zweite Spritzscheibe 124 aufgesetzt, die als Ringscheibe ausgebildet ist und einen radial außenliegenden Ringraum bzw. eine radial außenliegende Ringtasche definiert.

Sofern Öl in die Ausnehmungen 118, 120 gelangt, wird dieses im Betrieb aufgrund von Zentrifugalkräften radial nach außen geleitet und staut sich dort auf, was in Fig. 4 schematisch durch ein Stauniveau 125 angedeutet ist.

Der Radkörper 116 ist ferner mit einer Mehrzahl von axialen Durchbrechungen (Verbindungskanälen) 126 versehen, die zwischen der Ringtasche 118 und der Ringtasche der Ausnehmung 120 verlaufen und eine Fluidverbindung hierzwischen einrichten.

Ferner ist in Fig. 4 gezeigt, dass an dem Gehäuse 24 ein Ölleitelement 128 vorgesehen sein kann, das von oben herunterströmendes Fluid auffängt und in axialer Richtung in die erste Axialausnehmung 118 leitet.

Mit anderen Worten wird aufgrund des Ölleitelements 128 gezielt Fluid in die Axialausnehmung 118 geleitet, so dass dieses sich im Betrieb in der Ringtasche aufstaut. Durch die Verbindungskanäle 126 bildet sich ein entsprechendes Fluidniveau auch in der gegenüberliegenden Ringtasche der Axialausnehmung 120 aus.

Die zwei Spritzscheiben 122, 124 sind mittels einer Mehrzahl von Zapfen 132 an dem Radkörper 116 festgelegt. Die Zapfen sind insbesondere vernietet, wobei eine flächige Anlage der Spritzscheiben 122, 124 an dem radial außen liegenden Abschnitt des Radkörpers 116 gewollterweise nicht fluiddicht ist.

Durch diese Verbindungsflächen wird folglich ein Fluidspalt 130 eingerichtet, wie es in Fig. 5 zu sehen ist. Das in den Ringtaschen aufgrund von Zentrifugalkräften befindliche Fluid wird über die Ringspalte 130 radial nach außen gedrückt und tritt im Bereich der Verzahnung 134 des Konstanten-Rades 46 aus.

Die Verzahnung 136 des damit in Eingriff stehenden Antriebsritzels 44 ist breiter (besitzt eine größere Zahnbreite) als die Verzahnung 134. Demzufolge wird das über die Ringspalte 130 radial ausströmende Fluid unmittelbar in den Eingriffsbereich der Verzahnungen 134, 136 geführt, so dass eine gute Schmierung bzw. Kühlung gewährleistet ist.

## Patentansprüche

1. Antriebseinheit (12) für ein Kraftfahrzeug (10), mit einem elektrischen Antriebsmotor (14) und einem Wechselgetriebe (16) mit wenigstens zwei Gangstufen (1, 2), wobei eine Motorwelle (40) des Antriebsmotors (14) oder eine hiermit verbundene Antriebswelle (42) über einen Konstanten-Radsatz (K) mit einer Zwischenwelle (48) des Wechselgetriebes (16) verbunden ist, und mit einem Ausgleichsgetriebe (18), wobei Antriebsleistung von dem Antriebsmotor (14) über das Wechselgetriebe (16) auf das Ausgleichsgetriebe (18) geführt wird,
**dadurch gekennzeichnet, dass**
Gang-Radsätze (50, 54; 52, 56) für Gangstufen (1, 2) des Wechselgetriebes (16) und das Ausgleichsgetriebe (18) in axialer Richtung zwischen dem Antriebsmotor (14) und dem Konstanten-Radsatz (K) angeordnet sind.

2. Antriebseinheit Anspruch 1, **dadurch gekennzeichnet, dass** der Antriebsmotor (14) und das Wechselgetriebe (16) in einem gemeinsamen Gehäuse (24) aufgenommen sind.

3. Antriebseinheit nach Anspruch 2, **dadurch gekennzeichnet, dass** in dem Gehäuse (24) ferner das Ausgleichsgetriebe (18) aufgenommen ist, das ein Eingangsglied (58) aufweist, das mit dem Wechselgetriebe (16) verbunden ist.

4. Antriebseinheit nach Anspruch 2 oder 3, **dadurch gekennzeichnet, dass** das Gehäuse (24) eine Trennwand (38) aufweist, durch die hindurch eine Motorwelle (40) des Antriebsmotors (14) oder eine hiermit verbundene Antriebswelle (42) hin zu dem Wechselgetriebe (16) geführt ist.

5. Antriebseinheit nach einem der Ansprüche 2 bis 4, **dadurch gekennzeichnet, dass** eine Gehäusebasis (26) einen an einer Seite offenen, mittels eines ersten Deckels (32) verschlossenen Motorraum (30) zur Aufnahme des Antriebsmotors (14) sowie einen Getrieberaum (28) zur Aufnahme des Wechselgetriebes (16) sowie gegebenenfalls des Ausgleichsgetriebes (18) aufweist.

6. Antriebseinheit nach Anspruch 5, **dadurch gekennzeichnet, dass** der Getrieberaum (28) an der anderen Seite der Gehäusebasis (26) offen und mittels eines zweiten Deckels (34) verschlossenen ist.

7. Antriebseinheit nach einem der Ansprüche 1 bis 6, **dadurch gekennzeichnet, dass** die Übersetzung des Konstanten-Radsatzes (K) im Bereich von 1:3 bis 1:7, vorzugsweise im Bereich von 1:4 bis 1:6 liegt.

8. Antriebseinheit nach Anspruch 7, **dadurch gekennzeichnet, dass** der Konstanten-Radsatz (K) ein Antriebsritzel (44) aufweist, das an der Motorwelle (40) oder der Antriebswelle (42) festgelegt ist, die mit der Motorwelle (40) verbunden ist.

9. Antriebseinheit nach Anspruch 8, **dadurch gekennzeichnet, dass** das Antriebsritzel (44) mittels eines ersten und eines zweiten Lagers (82, 84) gelagert ist, die vorzugsweise unmittelbar benachbart auf der einen bzw. der anderen Seite des Antriebsritzels (44) angeordnet sind.

10. Antriebseinheit nach Anspruch 6, **dadurch gekennzeichnet, dass** der Konstanten-Radsatz (K) benachbart zu dem zweiten Deckel (34) angeordnet ist, der den Getrieberaum (28) verschließt.

11. Antriebseinheit nach einem der Ansprüche 1 bis 10, **dadurch gekennzeichnet, dass** das Wechselgetriebe (16) einen ersten und einen zweiten Gang-Radsatz (50, 54; 52, 56) aufweist, die jeweils ein mit einem Eingangsglied (58) des Ausgleichsgetriebes (18) drehfest verbundenes Festrad (54, 56) aufweisen.

12. Antriebseinheit nach einem der Ansprüche 1 bis 11, **dadurch gekennzeichnet, dass** das Wechselgetriebe (16) einen ersten und einen zweiten Gang-Radsatz (50, 54; 52, 56) aufweist, die jeweils ein Losrad (50, 52) aufweisen, wobei die Losräder (50, 52) an der Zwischenwelle (48) gelagert sind und jeweils mittels einer Schaltkupplung (SK1, SK2) mit der Zwischenwelle (48) verbindbar sind.

13. Antriebseinheit nach Anspruch 1 und nach Anspruch 11 oder 12, **dadurch gekennzeichnet, dass** der erste und der zweite Gang-Radsatz (50, 54; 52, 56) in axialer Richtung zwischen dem Antriebsmotor (14) und dem Konstanten-Radsatz (K) angeordnet sind.

14. Antriebseinheit nach einem der Ansprüche 11 bis 13, **dadurch gekennzeichnet, dass** der erste Gang-Radsatz (50, 54) eine Übersetzung im Bereich von 1:2 bis 1:6, vorzugsweise im Bereich von 1:3 bis 1:5 aufweist.

15. Antriebseinheit nach einem der Ansprüche 11 bis 14, **dadurch gekennzeichnet, dass** der zweite Gang-Radsatz (52, 56) eine Übersetzung im Bereich von 1:2 bis 1:4,5, vorzugsweise im Bereich von 1:2,5 bis 1:4 aufweist.

16. Antriebseinheit nach einem der Ansprüche 1 bis 15, **dadurch gekennzeichnet, dass** eine Parksperreneinrichtung (64) an der Motorwelle (40) des Antriebs-motors (14) oder an der hiermit drehfest verbundenen Antriebswelle (42) angreift.

17. Antriebseinheit nach Anspruch 16, **dadurch gekennzeichnet, dass** die Parksperreneinrichtung (64) eine Sperrmuffe (66) aufweist, die mit einer Innen - und mit einer Außenverzahnung versehen und axial in Bezug auf die Motorwelle (40) bzw. die hiermit verbundene Antriebswelle (42) verschiebbar ist, und zwar zwischen einer Freigabeposition und einer Sperrposition.

18. Antriebseinheit nach Anspruch 17, **dadurch gekennzeichnet, dass** die Außenverzahnung der Sperrmuffe (66) in einem gehäusefesten Abschnitt (71) der Antriebseinheit (12) axial geführt ist.

19. Antriebseinheit nach Anspruch 17 oder 18, **dadurch gekennzeichnet, dass** die Motorwelle (40) oder die hiermit verbundene Antriebswelle (42) einen Außenverzahnungsabschnitt (108) aufweist, auf den die Sperrmuffe (66) verschiebbar ist, um die Sperrposition einzurichten.

20. Antriebseinheit nach einem der Ansprüche 17 bis 19, **dadurch gekennzeichnet, dass** die Innenverzahnung der Sperrmuffe (66) und/oder der Außenverzahnungsabschnitt (108) der Motorwelle (40) bzw. der hiermit verbundenen Antriebswelle (42) an der axial zu der jeweils anderen Verzahnung weisenden Stirnseite angespitzt ist.

21. Antriebseinheit nach einem der Ansprüche 16 bis 20, **dadurch gekennzeichnet, dass** die Parksperreneinrichtung (64) mittels einer elektromotorischen Aktuatoreinrichtung (62) betätigbar ist.

22. Antriebseinheit nach Anspruch 21 **dadurch gekennzeichnet, dass** die Sperrmuffe (66) in Bezug auf die Aktuatoreinrichtung (62) in Richtung in die Sperrposition elastisch vorgespannt ist.

23. Antriebseinheit nach Anspruch 21 oder 22, **dadurch gekennzeichnet, dass** die Aktuatoranordnung (62) sowohl zur Betätigung der Parksperreneinrichtung (64) als auch zur Betätigung von Schaltkupplungen (SK1, SK2) zum Ein- bzw. Auslegen der Gangstufen (1, 2) des Wechselgetriebes (16) dient.

24. Antriebseinheit nach einem der Ansprüche 21 bis 23, **dadurch gekennzeichnet, dass** die Aktuatoranordnung (62) in axialer Richtung zumindest teilweise, vorzugsweise vollständig zwischen dem Antriebsmotor (14) und dem Konstanten-Radsatz (K) angeordnet ist.

25. Antriebseinheit nach einem der Ansprüche 16 bis 24, **dadurch gekennzeichnet, dass** die Parksperreneinrichtung (64) in axialer Richtung zwischen dem Antriebsmotor (14) und dem Konstanten-Radsatz (K) angeordnet ist.

26. Antriebseinheit nach einem der Ansprüche 1 bis 25, **dadurch gekennzeichnet, dass** der Antriebsmotor (14) für Drehzahlen größer 15.000 U/min, vorzugsweise für Drehzahlen größer 20.000 U/min ausgelegt ist.

27. Antriebseinheit nach einem der Ansprüche 2 bis 26 wenn abhängig vom Anspruch 2, **dadurch gekennzeichnet, dass** in dem Gehäuse (24) ein Kühlpfad (78) zur Kühlung des Antriebsmotors (14), des Wechselgetriebes (16) und/oder einer Leistungselektronik ausgebildet ist.

## Claims

1. Drive unit (12) for a motor vehicle (10), having an electric drive motor (14) and having a variable-speed transmission (16) with at least two gear stages (1, 2), wherein a motor shaft (40) of the drive motor (14) or a driveshaft (42) connected to said motor shaft is connected via a constant gear set (K) to an intermediate shaft (48) of the variable-speed transmission (16), and having a differential gear (18), wherein drive power is transmitted from the drive motor (14) to the differential gear (18) via the variable-speed transmission (16),
**characterized in that**
gearwheel sets (50, 54; 52, 56) for gear stages (1, 2) of the variable-speed transmission (16) and the differential gear (18) are arranged between the drive motor (14) and the constant gear set (K) as viewed in an axial direction.

2. Drive unit according to Claim 1, **characterized in that** the drive motor (14) and the variable-speed transmission (16) are accommodated in a common housing (24).

3. Drive unit according to Claim 2, **characterized in that**, in the housing (24), there is also accommodated the differential gear (18) which has an input element (58) connected to the variable-speed transmission (16).

4. Drive unit according to Claim 2 or 3, **characterized in that** the housing (24) has a partition wall (38) through which a motor shaft (40) of the drive motor (14) or a driveshaft (42) connected to said motor shaft is guided to the variable-speed transmission (16).

5. Drive unit according to one of Claims 2 to 4, **characterized in that** a housing base (26) has a motor compartment (30), which is open on one side and closed off by means of a first cover (32), for accommodating the drive motor (14), and a transmission compartment (28) for accommodating the variable-speed transmission (16) and, if appropriate, the differential gear (18).

6. Drive unit according to Claim 5, **characterized in that** the transmission compartment (28) is open on the other side of the housing base (26) and is closed off by means of a second cover (34).

7. Drive unit according to one of Claims 1 to 6, **characterized in that** the transmission ratio of the constant gear set (K) is in the range from 1:3 to 1:7, preferably in the range from 1:4 to 1:6.

8. Drive unit according to Claim 7, **characterized in that** the constant gear set (K) has a drive pinion (44) which is fixed to the motor shaft (40) or to the driveshaft (42) connected to the motor shaft (40).

9. Drive unit according to Claim 8, **characterized in that** the drive pinion (44) is mounted by means of a first and a second bearing (82, 84) which are preferably arranged directly adjacent on one or the other side of the drive pinion (44), respectively.

10. Drive unit according to Claim 6, **characterized in that** the constant gear set (K) is arranged adjacent to the second cover (34) which closes off the transmission compartment (28).

11. Drive unit according to one of Claims 1 to 10, **characterized in that** the variable-speed transmission (16) has a first and a second gearwheel set (50, 54; 52, 56) which each have one fixed gear (54, 56) connected rotationally fixed to an input element (58) of the differential gear (18).

12. Drive unit according to one of Claims 1 to 11, **characterized in that** the variable-speed transmission (16) has a first and a second gearwheel set (50, 54; 52, 56) which have in each case one loose gear (50, 52), wherein the loose gears (50, 52) are mounted on the intermediate shaft (48) and are each connectable to the intermediate shaft (48) by means of a shift clutch (SK1, SK2).

13. Drive unit according to Claim 1 and according to Claim 11 or 12, **characterized in that** the first and the second gearwheel set (50, 54; 52, 56) are arranged between the drive motor (14) and the constant gear set (K) as viewed in an axial direction.

14. Drive unit according to one of Claims 11 to 13, **characterized in that** the first gearwheel set (50, 54) has a transmission ratio in the range from 1:2 to 1:6, preferably in the range from 1:3 to 1:5.

15. Drive unit according to one of Claims 11 to 14, **characterized in that** the second gearwheel set (52, 56) has a transmission ratio in the range from 1:2 to 1:4.5, preferably in the range from 1:2.5 to 1:4.

16. Drive unit according to one of Claims 1 to 15, **characterized in that** a parking lock device (64) engages with the motor shaft (40) of the drive motor (14) or with the driveshaft (42) connected rotationally fixed to said motor shaft.

17. Drive unit according to Claim 16, **characterized in that** the parking lock device (64) has a locking sleeve (66) which is provided with an internal toothing and with an external toothing and which is movable axially in relation to the motor shaft (40) or in relation to the driveshaft (42) connected thereto, specifically between a release position and a locking position.

18. Drive unit according to Claim 17, **characterized in that** the external toothing of the locking sleeve (66) is guided axially in a portion (71), which is fixed with respect to the housing, of the drive unit (12).

19. Drive unit according to Claim 17 or 18, **characterized in that** the motor shaft (40) or the driveshaft (42) connected thereto has an external toothing portion (108) on which the locking sleeve (66) is movable in order to establish the locking position.

20. Drive unit according to one of Claims 17 to 19, **characterized in that** the internal toothing of the locking sleeve (66) and/or the external toothing portion (108) of the motor shaft (40) or of the driveshaft (42) connected thereto is tapered at the end side pointing toward the respective other toothing.

21. Drive unit according to one of Claims 16 to 20, **characterized in that** the parking lock device (64) can be actuated by means of an electric-motor actuator device (62).

22. Drive unit according to Claim 21, **characterized in that** the locking sleeve (66) is preloaded elastically in relation to the actuator device (62) in the direction of the locking position.

23. Drive unit according to Claim 21 or 22, **characterized in that** the actuator arrangement (62) serves both for the actuation of the parking lock device (64) and also for the actuation of shift clutches (SK1, SK2) for the engagement and disengagement of the gear stages (1, 2) of the variable-speed transmission (16).

24. Drive unit according to one of Claims 21 to 23, **characterized in that** the actuator arrangement (62) is arranged at least partially, preferably entirely between the drive motor (14) and the constant gear set (K) as viewed in an axial direction.

25. Drive unit according to one of Claims 16 to 24, **characterized in that** the parking lock device (64) is arranged in an axial direction between the drive motor (14) and the constant gear set (K).

26. Drive unit according to one of Claims 1 to 25, **characterized in that** the drive motor (14) is designed for rotational speeds of higher than 15,000 rpm, preferably for rotational speeds of higher than 20,000 rpm.

27. Drive unit according to one of Claims 2 to 26, where dependent on Claim 2, **characterized in that** a cooling path (78) for cooling the drive motor (14), the variable-speed transmission (16) and/or power electronics is formed in the housing (24).

## Revendications

1. Unité d'entraînement (12) pour un véhicule automobile (10), comprenant un moteur d'entraînement électrique (14) et une boîte de vitesses (16) avec au moins deux rapports de vitesses (1, 2), un arbre de moteur (40) du moteur d'entraînement (14) ou un arbre d'entraînement (42) connecté à celui-ci étant connecté par le biais d'un jeu de pignons constant (K) à un arbre intermédiaire (48) de la boîte de vitesses (16), et comprenant un différentiel (18), la puissance d'entraînement étant transmise depuis le moteur d'entraînement (14) par le biais de la boîte de vitesses (16) au différentiel (18),
**caractérisée en ce que**
les jeux de pignons de rapports (50, 54 ; 52, 56) pour des rapports de vitesses (1, 2) de la boîte de vitesses (16) et le différentiel (18) sont disposés dans la direction axiale entre le moteur d'entraînement (14) et le jeu de pignons constant (K).

2. Unité d'entraînement selon la revendication 1, **caractérisée en ce que** le moteur d'entraînement (14) et la boîte de vitesses (16) sont reçus dans un boîtier commun (24).

3. Unité d'entraînement selon la revendication 2, **caractérisée en ce que** dans le boîtier (24) est en outre reçu le différentiel (18), lequel présente un organe d'entrée (58), qui est connecté à la boîte de vitesses (16).

4. Unité d'entraînement selon la revendication 2 ou 3, **caractérisée en ce que** le boîtier (24) présente une paroi de séparation (38) à travers laquelle est guidé un arbre de moteur (40) du moteur d'entraînement (14) ou un arbre d'entraînement (42) connecté à celui-ci vers la boîte de vitesses (16).

5. Unité d'entraînement selon l'une quelconque des revendications 2 à 4, **caractérisée en ce qu'**une base de boîtier (26) présente un compartiment moteur (30) ouvert d'un côté, fermé au moyen d'un premier couvercle (32), pour recevoir le moteur d'entraînement (14) ainsi qu'un espace de transmission (28) pour recevoir la boîte de vitesses (16) et également le cas échéant le différentiel (18).

6. Unité d'entraînement selon la revendication 5, **caractérisée en ce que** l'espace de transmission (28) est ouvert de l'autre côté de la base de boîtier (26) et est fermé au moyen d'un deuxième couvercle (34).

7. Unité d'entraînement selon l'une quelconque des revendications 1 à 6, **caractérisée en ce que** le rapport de transmission du jeu de pignons constant (K) est de l'ordre de 1:3 à 1:7, de préférence de l'ordre de 1:4 à 1:6.

8. Unité d'entraînement selon la revendication 7, **caractérisée en ce que** le jeu de pignons constant (K) présente un pignon d'entraînement (44) qui est fixé sur l'arbre de moteur (40) ou sur l'arbre d'entraînement (42) qui est connecté à l'arbre de moteur (40).

9. Unité d'entraînement selon la revendication 8, **caractérisée en ce que** le pignon d'entraînement (44) est supporté au moyen d'un premier et d'un deuxième palier (82, 84), lesquels sont disposés de préférence directement à côté d'un côté ou de l'autre côté du pignon d'entraînement (44).

10. Unité d'entraînement selon le revendication 6, **caractérisée en ce que** le jeu de pignons constant (K) est disposé à côté du deuxième couvercle (34) qui ferme l'espace de transmission (28).

11. Unité d'entraînement selon l'une quelconque des revendications 1 à 10, **caractérisée en ce que** la boîte de vitesses (16) présente un premier et un deuxième jeu de pignons de rapports (50, 54 ; 52, 56), lesquels présentent à chaque fois un pignon fixe (54, 56) connecté de manière solidaire en rotation à un organe d'entrée (58) du différentiel (18).

12. Unité d'entraînement selon l'une quelconque des revendications 1 à 11, **caractérisée en ce que** la boîte de vitesses (16) présente un premier et un deuxième jeu de pignons de rapports (50, 54 ; 52, 56), lesquels présentent à chaque fois un pignon fou (50, 52), les pignons fous (50, 52) étant montés sur l'arbre intermédiaire (48) et pouvant être connectés à chaque fois au moyen d'un embrayage (SK1, SK2) à l'arbre intermédiaire (48).

13. Unité d'entraînement selon la revendication 1 et selon la revendication 11 ou 12, **caractérisée en ce que** le premier et le deuxième jeu de pignons de rapports (50, 54 ; 52, 56) sont disposés dans la direction axiale entre le moteur d'entraînement (14) et le jeu de pignons constant (K).

14. Unité d'entraînement selon l'une quelconque des revendications 11 à 13, **caractérisée en ce que** le premier jeu de pignons de rapports (50, 54) présente un rapport de transmission de l'ordre de 1:2 à 1:6, de préférence de l'ordre de 1:3 à 1:5.

15. Unité d'entraînement selon l'une quelconque des revendications 11 à 14, **caractérisée en ce que** le deuxième jeu de pignons de rapports (52, 56) présente un rapport de transmission de l'ordre de 1:2 à 1:4,5, de préférence de l'ordre de 1:2,5 à 1:4.

16. Unité d'entraînement selon l'une quelconque des revendications 1 à 15, **caractérisée en ce qu'**un dispositif de verrouillage de stationnement (64) vient en prise sur l'arbre de moteur (40) du moteur d'entraînement (14) ou sur l'arbre d'entraînement (42) connecté de manière solidaire en rotation à celui-ci.

17. Unité d'entraînement selon la revendication 16, **caractérisée en ce que** le dispositif de verrouillage de stationnement (64) présente un manchon de verrouillage (66) qui est pourvu d'une denture interne et d'une denture externe et qui peut être déplacé axialement par rapport à l'arbre de moteur (40) ou à l'arbre d'entraînement (42) connecté à celui-ci, et ce entre une position de libération et une position de verrouillage.

18. Unité d'entraînement selon la revendication 17, **caractérisée en ce que** la denture externe du manchon de verrouillage (66) est guidée axialement dans une portion (71) fixée au boîtier de l'unité d'entraînement (12).

19. Unité d'entraînement selon la revendication 17 ou 18, **caractérisée en ce que** l'arbre de moteur (40) ou l'arbre d'entraînement (42) connecté à celui-ci présente une portion de denture externe (108), sur laquelle peut être déplacé le manchon de verrouillage (66), afin d'ajuster la position de verrouillage.

20. Unité d'entraînement selon l'une quelconque des revendications 17 à 19, **caractérisée en ce que** la denture interne du manchon de verrouillage (66) et/ou la portion de denture externe (108) de l'arbre de moteur (40) ou de l'arbre d'entraînement (42) connecté à celui-ci, est moulée sur le côté frontal tourné axialement vers l'autre denture respective.

21. Unité d'entraînement selon l'une quelconque des revendications 16 à 20, **caractérisée en ce que** le disposit de verrouillage de stationnement (64) peut être actionné au moyen d'un dispositif d'actionneur (62) à moteur électrique.

22. Unité d'entraînement selon la revendication 21, **caractérisée en ce que** le manchon de verrouillage (66) est précontraint élastiquement par rapport au dispositif d'actionneur (62) dans la direction de la position de verrouillage.

23. Unité d'entraînement selon la revendication 21 ou 22, **caractérisée en ce que** l'agencement d'actionneur (62) sert à la fois à l'actionnement du dispositif de verrouillage de stationnement (64) et à l'actionnement d'embrayages (SK1, SK2) pour l'embrayage ou le débrayage des rapports de vitesses (1, 2) de la boîte de vitesses (16).

24. Unité d'entraînement selon l'une quelconque des revendications 21 à 23, **caractérisée en ce que** l'agencement d'actionneur (62) est disposé dans la direction axiale au moins en partie, de préférence complètement entre le moteur d'entraînement (14) et le jeu de pignons constant (K).

25. Unité d'entraînement selon l'une quelconque des revendications 16 à 24, **caractérisée en ce que** le dispositif de verrouillage de stationnement (64) est disposé dans la direction axiale entre le moteur d'entraînement (14) et le jeu de pignons constant (K).

26. Unité d'entraînement selon l'une quelconque des revendications 1 à 25, **caractérisée en ce que** le moteur d'entraînement (14) est conçu pour des régimes supérieurs à 15 000 tr/m, de préférence pour des régimes supérieurs à 20 000 tr/m.

27. Unité d'entraînement selon l'une quelconque des revendications 2 à 26 lorsqu'elle dépend de la revendication 2, **caractérisée en ce qu'**un chemin de refroidissement (78) pour le refroidissement du moteur d'entraînement (14), de la boîte de vitesses (16) et/ou d'une électronique de puissance est réalisé dans le boîtier (24).
